# EUROPEAN PATENT APPLICATION

(11) **EP 1 415 531 A1**
(43) Date of publication of application: **06.05.2004**
(21) Application number: 03078452.4
(22) Date of filing: 31.10.2003
(51) Int. Cl.: A01G 9/00

(54) **Method for growing hedge plants and pot/plant assembly**

(30) Priority: 01.11.2002 NL 1021821
(71) Applicant: Lodders Boomkwekerinjken B.V., 4884 NB Wernhout (NL)
(72) Inventor: Lodders, Marinus Cornelis Jacobus, 4884 MK Wernhout (NL); Lodders, Bert Cornelis, 4884 BG Wernhout (NL)
(74) Representative: van Westenbrugge, Andries

(57) **Abstract**

Method for growing hedge plants (2,3). After they have been grown by the grower, they are harvested, optionally with a ball of earth, and at least two hedge plants (3) are arranged in a single pot (5). This takes place in such a manner that even after a prolonged period of time (months), it is readily possible to separate these hedge plants (3). The pot (5) with plants (3) is then transferred via the distribution network to the point of sale. The seller separates the plants (3) at the moment of planting. This allows these plants (3) to be sold for a large number of months through the year.

## Description

The present invention relates to a method for growing plants, comprising the commercial cultivation of said plants in a first substrate, removing said plants from said substrate and placing them in a packaging means, transporting said packaging means to a location of use, removing said plant from said packaging means and arranging said plant in the ground at said location of use, the soil material being removed from the roots, so that the roots are bare. In this state, a number of hedge plants (for example 10) are bundled together and transported to the point of sale, where they are offered for sale. The user then makes an opening in the ground at the intended location, places the plant with its bare roots into this opening and then fills it with soil or some other substrate.

A method of this type is known from FR 1 529 547. In this method, roses which have been grown in the ground outdoors are transferred to a packaging means, which packaging means is filled with sand, vermiculite or other material which does not contain soil. Then, the plant is temporarily stored in a cold store to arrest or inhibit its growth.

Then, the packaging means and the plant are transferred to the location of use and the plant is placed in the ground.

The present invention relates to the growth of hedge plants. After initial cultivation, these plants are removed from the field.

Although this method is particularly efficient with regard to transport, it has the considerable limitation that as a result hedge plants can only be sold for a limited number of months each year, since conditions have to be such that the plant can withstand having its roots exposed for a certain time without being damaged. Consequently, hedge plants of this type are generally only available between the end of October and at the latest April of the following year. Moreover, a bundle of hedge plants has not proven to be very successful at attracting sales. They are generally stored in a comer or the like supported against other objects.

US-A 5,561,947 describes a container for positioning a number of hedge plants at a distance from one another. This container is placed in the ground and then partitions in the container are removed, so that the hedge plants are automatically at a suitable distance from one another, i.e. they are not removed from the pot with the plants then being arranged at a greater distance from one another.

WO 02/21903 describes a string of plants placed at predefined positions. This string of plants is placed into the ground with the distance between the plants remaining unaltered.

The object of the present invention is to provide a method which makes it possible for hedge plants to be made available for sale over a longer period of the year and moreover to allow them to be sold in a more attractive form.

In a method as described above, this object is achieved by the measures described in Claim 1.

According to the present invention, the hedge plants are no longer transported with bare roots, but rather at least two and preferably at least five, more particularly about ten such plants are placed in a pot which is filled with a substrate such as potting compost. It has been found that if the hedge plants remain in a pot of this type for no longer than about a year, it is always easy for them to be separated from one another without damage, i.e. the roots do not rapidly grow together. As a result, it is possible for the purchaser to take the plants away from the garden centre or the like in the pot and to separate the various hedge plants from one another at the location of use. The fact that the plants are in a substrate means that there is no longer a risk of the roots being damaged, as was present with the plant in accordance with the prior art in the period outside November - April, i.e. in principle the plant can be sold for many months of the year, possibly even all the year round, without this having adverse effects on the plant.

After it has been placed in the pot, the plant can generally continue to grow. The temperature in this case may be over 10°C, i.e. the hedge plant with the pot is preferably stored outdoors, for example on a concrete floor, and can be provided with water in some way. It is also possible for the plant to be stored in shops for a prolonged period of time. On arrival at the location of use, the user will separate the various plants from one another and place them at a distance from one another in order to form a hedge. In general, the distance between the plants will be at least 10 cm and preferably about 20 cm.

Moreover, arranging the plants in a pot gives the option of providing an information carrier. This may either be applied to the pot or attached to the plant. An information carrier of this type contains information relating to the origin of the plant and to the way in which the plant should be treated further, as well as any other (advertising) information.

Since the plant is now arranged in a pot, it can be transported in the usual way, i.e. it is no longer necessary to take particular measures to transport bunches of hedge plants. The pots can be transported in the usual way using sale trolleys (Danish trolleys) by lorry and then placed on shelves. This also improves the chances of the plant surviving to reach the point of sale.

Since there is little attachment between the different hedge plants in a pot, it is preferable for a net or other structure to be arranged over the top side of the pot, preventing the substrate with plants from falling out of the pot in the event of rough handling, for example when the pot is lifted by the plant.

According to the present invention, it is possible for the harvested plant with bare roots to be placed in a cold store and for the plants to be supplied in pots all the year round. Of course, it is also possible for the plant to be stored in the cold store while it is in the pot, but in practice this is not necessary since it is many months or even more than a year before there is a risk of the various hedge plants growing together.

In the present context, the term hedge plants is deemed to encompass, inter alia:
- Berberis thunbergii "Atropurpurea"
- Acer campestre
- Buxus sempervirens
- Ligustrum ovalifolium
- Crataegys monogyna
- Carpinus betulus
- Fagus sylvatica
- Taxus baccata
- Prunus laurocerasus "Rotundifolia"
- Fagus sylvatica "Atropurpurea"
- Berberis thunbergii
- Ligustrum vulgare "Atrovirens"

It will of course be understood that it is also possible for other hedge plants to be harvested and sold with the aid of the present invention.

The present invention also relates to a pot/plant assembly comprising a pot with at least two hedge plants, which can be separated without damage to the plants, arranged therein, comprising a net-like structure or other retaining means which extends over the free top surface of this pot. After all, according to the present invention the roots of the various hedge plants which have been placed in the pot remain separate from one another and do not or scarcely become intertwined. Consequently, there will be relatively little cohesion inside the pot. This contrasts with other structures in which it is intended for the plants to take root in the substrate.

The invention will be explained in more detail below with reference to an exemplary embodiment depicted in the drawing, in which:
Fig. 1 diagrammatically depicts the growth of hedge plants in a nursery;
Fig. 2 shows the harvested hedge plants as a bundle;
Fig. 3 shows the hedge plants according to the present invention positioned in a pot;
Fig. 4 shows the transportation of a number of pots as shown in Fig. 3;
Fig. 5 shows the planting of the hedge plants by the user.

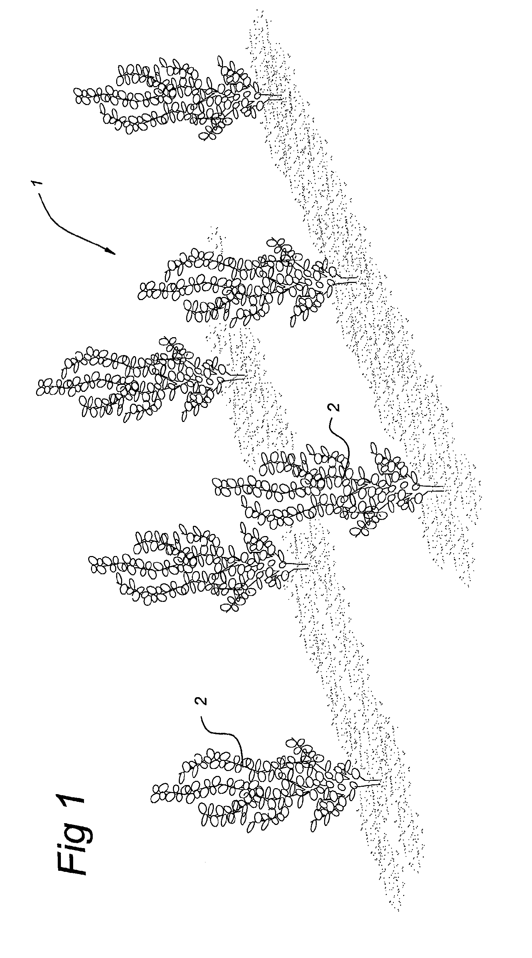

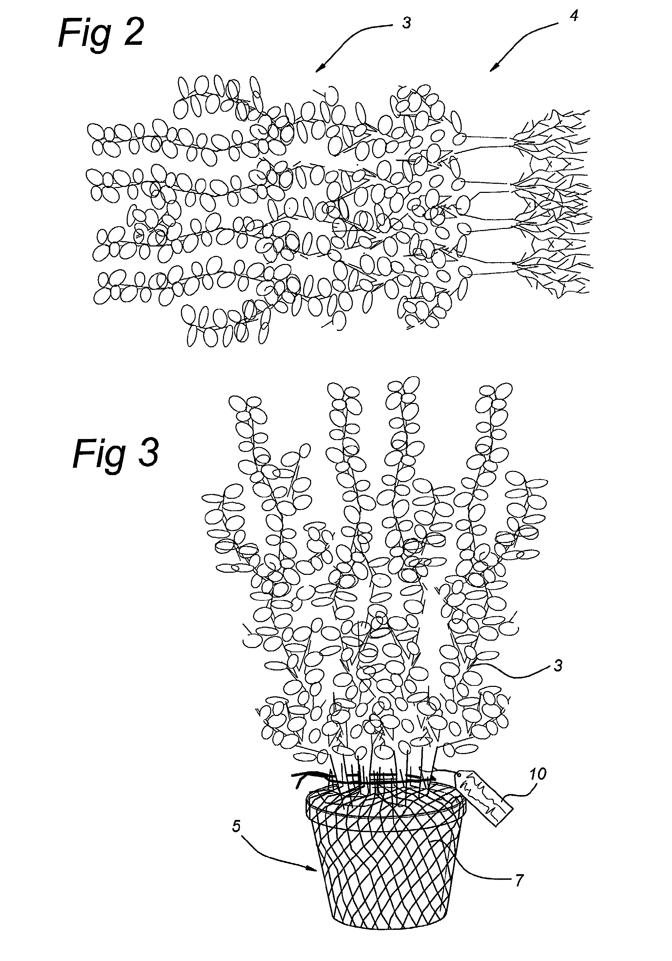

In Fig. 1, 1 denotes a field comprising a number of beds on which various hedge plants 2 are placed. These are harvested either as an annual plant or a perennial plant at the end of the season, normally October. The harvesting is carried out in such a manner that the roots are bare and a number of harvested plants 3 are combined to form a bundle 4, as shown in Fig. 2.

According to the prior art, the plants are transported in this state to the point of sale, where they are offered for sale. On account of the vulnerability and shelf life, transport of this type meant that storage was only possible between November of one year and April of the next year.

According to the present invention, the plants shown in Fig. 2 are placed into a pot 5, either immediately or after storage in a cold store. This pot is filled with soil, such as potting compost, or other substrate. Since the plants are arranged relatively freely in the pot, it is necessary to provide protection in order to prevent the plants and/or the substrate from coming out of the pot in the event of rough handling thereof. In the example shown, this protection comprises a net 7. It can be seen from Fig. 3 that four hedge plants 3 have been put in a pot. A pot of this type preferably consists of plastic material produced by injection moulding and has a volume of at least 3 litres. According to a particular embodiment, the maximum volume is approximately 7.5 litres. According to the present invention, at least two hedge plants are accommodated in the pot, but under standard conditions this number may rise to approximately ten hedge plants. 10 denotes an information carrier which contains information about the plants, origin, price and the like. The weight of the pots in question will vary as a function of the size of the plants and also the number of plants. For example, if five plants are placed in a pot, the weight of a pot filled with potting compost is about 2.5 kg, and if ten plants are used, the weight is between 3.5-4 kg. Weights of this level are easy to handle.

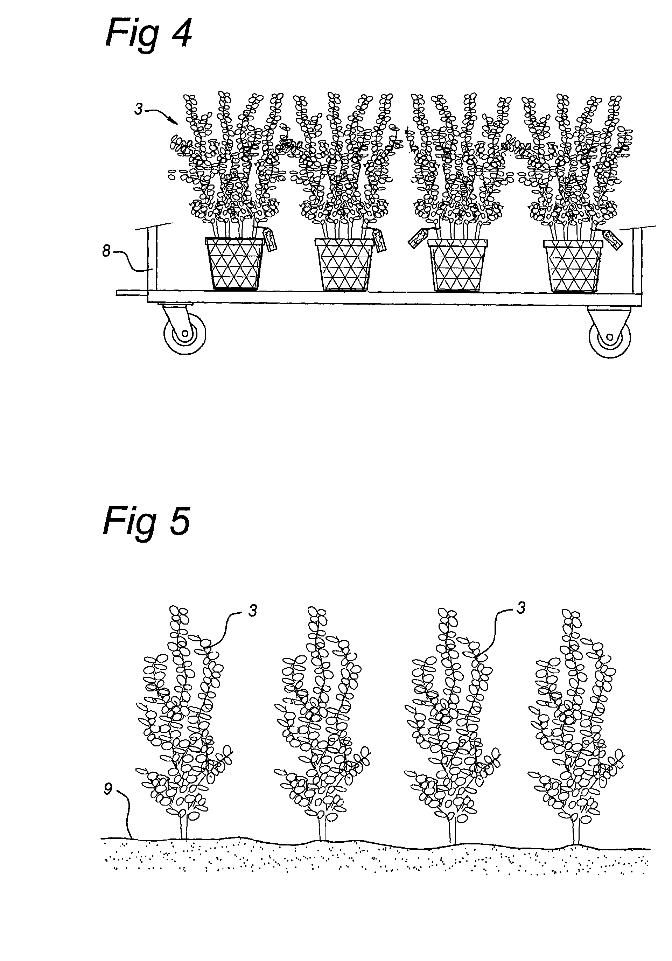

Pots of this type which are shown in Fig. 3 are easy to transport. Fig. 4 shows the bottom part of a sale trolley with which the pots can be transported from the nursery to the lorry and from the lorry to the point of sale.

After the user has purchased a pot, he will separate the plants 3 from one another after having first removed the net 7. This separation can be carried out without difficulty up to at least a year after the plants have been placed into a pot. He then plants the plants in soil 9 and can in this way grow a hedge or the like, as shown in Fig. 5. These plants are placed at a considerably greater distance from one another than when they were arranged in the pot. After all, the intention is to form a hedge. The distance between the plants is preferably greater than 10 cm, and more particularly is approximately 20 cm, i.e. approximately 1 meter of hedge can be obtained in a packaging means comprising five hedge plants in a pot. A packaging means holding ten plants results in a hedge of approximately 2 metres.

Although the invention has been described above on the basis of a preferred embodiment, variants which lie within the scope of the appended claims will be obvious to the person skilled in the art.

## Claims

1. Method for growing plants, comprising the commercial cultivation of said plants (2) in a first substrate, removing said plants from said substrate and placing them in a packaging means (5), transporting said packaging means to a location of use, removing said plant from said packaging means and arranging said plant in the ground at said location of use, **characterized in that** said plants comprise hedge plants (2) and said packaging means comprises a pot (5), with at least two hedge plants being arranged in a pot, which hedge plants, after they have been removed from said pot, can be positioned in the ground at a distance of at least 10 cm from one another.

2. Method according to Claim 1, wherein said distance is approximately 20 cm.

3. Method according to one of the preceding claims, wherein soil is provided in said pot.

4. Method according to one of the preceding claims, wherein said first substrate comprises the ground.

5. Method according to one of the preceding claims, wherein after they have been arranged in a pot, said hedge plants are temporarily stored in the outside air.

6. Method according to one of the preceding claims, wherein said pot (5) holding at least two hedge plants is provided with an information carrier (10).

7. Method according to one of the preceding claims, wherein after said hedge plants have been placed into said pot, means (7) are put in place to prevent the substrate from coming out of the pot.

8. Method according to one of the preceding claims, wherein ten hedge plants are arranged in said pot.

9. Method according to one of the preceding claims, wherein a number of pots provided with hedge plants which are positioned next to one another on a transporting surface are transported to the location of sale.

10. Method according to one of the preceding claims, wherein said pots containing hedge plants are stored in a cold store in order to be transported to said location of sale.

11. Method according to one of the preceding claims, wherein said pots containing hedge plants are transported in the months from May to October.

12. Pot/plant assembly, comprising a pot (5) with at least two hedge plants (3), which can be separated without damage to the plant, arranged therein, comprising a net-like structure (7) extending over the free top surface of the pot.

13. Pot/plant assembly according to Claim 12, comprising an information carrier (10).
